# EUROPEAN PATENT APPLICATION

(11) **EP 3 923 261 A1**
(43) Date of publication of application: **15.12.2021**
(21) Application number: 20178820.5
(22) Date of filing: 08.06.2020
(51) Int. Cl.: G09B 19/00

(54) **PROVIDING GUIDANCE TO DEVICE USERS**

(71) Applicant: Koninklijke Philips N.V., 5656 AG Eindhoven (NL)
(72) Inventor: Medema, Janine Willemijn, 5656 AE Eindhoven (NL); Godlieb, Robert, 5656 AE Eindhoven (NL)
(74) Representative: Philips Intellectual Property & Standards

(57) **Abstract**

The invention discloses a computer-implemented guidance control method (400). The method includes receiving (402) data relating to the use of a device by a user; determining (404) a usage quality measure for the user based on the received data; providing (406) first guidance data relating to device usage for presentation to the user of the device; halting (408) presentation of first guidance data to the user if the usage quality measure is equal to or greater than a first quality threshold (104; Fig. 2); and providing (410) second guidance data for presentation to the user of the device if the usage quality measure is below a second quality threshold (206; Fig. 2).

## Description

### FIELD OF THE INVENTION

The invention relates to providing information to a user and, more particularly, providing guidance data for presentation to a user of a device.

### BACKGROUND OF THE INVENTION

Providing guidance to a user with regard to their use of a device, such as a personal care device, may enhance their overall experience and benefit of using the device. Examples of how the user's experience may be enhanced include a cleaner shave, less skin irritation during a shave, a more thorough clean during an oral hygiene routine and/or an improved efficiency of the device being used.

A user of a device may initially have a relatively low skill level associated with their use of the device, and this may be improved if guidance is provided to them. As a result of the user's skill level increasing, the user may achieve a greater benefit from using the device and thus the user's satisfaction associated with their use of the device may increase and the user may be more inclined to use the device again in the future. Guidance may be provided to the user in a number of ways, such as via the device itself, via a connected speaker, or via some other presentation device, such as an interactive mirror. Guidance may include providing the user with instructions with respect to their use of the device, such as prompting the user to move the position of the device or to perform a certain motion during use of the device.

Providing guidance to a user continuously may lead to disengagement with the guidance and/or the device. Thus, there is a desire for a system in which guidance may be provided to a user depending on their skill level in order to maximise the user's engagement with the guidance and therefore maximise their skill and/or satisfaction with regard to their use of the device.

### SUMMARY OF THE INVENTION

By using a device incorrectly or inexpertly, a user may become dissatisfied with the device's performance and may even attribute the device's poor performance with a malfunction or wear of the device, or may incorrectly conclude that the device's performance is due to the device being of a low quality. To overcome this issue, guidance may be provided to the user with instructions describing how to use the device in order to improve the device's performance, thus improving the benefit of using the device. Providing guidance to the user may improve a level of skill associated with the user's use of the device. The user's skill level may be determined based on sensor data associated with the device.

However, if guidance is provided to the user continuously, including, for example, when the user is using the device proficiently, the user may tend to ignore or even disable the instructions. To overcome this problem, the instructions may be hidden upon the user becoming proficient in the use of the device (i.e. the user's skill level associated with their use of the device being equal to or above a threshold value). In both of the scenarios described above, the user's skill level associated with their use of the device may gradually decrease over time, and the user may once again incorrectly associate their reduced level of skill associated with their use of the device with a malfunction, wear, or intrinsic low quality of the device. Moreover, a temporary decrease in a user's skill level associated with their use of the device may be observed, wherein the skill level subsequently returns to the previously acquired skill level. Alternatively, a rapid and consistent decrease in a user's skill level may be observed. Embodiments disclosed herein may recognise both types of skill deterioration and take appropriate action accordingly.

According to some embodiments, therefore, guidance may be provided to a user at specific times and may be tailored depending on the user's current skill level and how their skill level has changed over time.

According to a first aspect, the present invention provides a computer-implemented guidance control method comprising: receiving data relating to the use of a device by a user; determining a usage quality measure for the user based on the received data; providing first guidance data for presentation to the user of the device, the first guidance data relating to the use of the device; responsive to determining that the usage quality measure is equal to or greater than a first quality threshold, halting presentation of first guidance data to the user; and responsive to determining that the usage quality measure is below a second quality threshold, providing second guidance data for presentation to the user of the device.

Advantageously, the method described herein may result in a user's skill level associated with their use of a device increasing thus enhancing the benefit to the user while simultaneously improving the effectiveness of the device being used and/or minimising the time in which a user is required to use the device in order to achieve a desired result (e.g. a reduction of hair on the user's face). The method described herein also seeks to improve the user's adherence to the guidance provided thus leading to improved results of the device being used (e.g. a cleaner shave). As a result of providing guidance only at specific times (i.e. when a threshold has been satisfied) and/or as a result of improved user satisfaction with the results of using the device, there may be a relatively higher likelihood of the user using the device again in the future.

In some embodiments, the data may be acquired using at least one sensor associated with the device.

The data may, in some embodiments, comprise data selected from a group comprising: a measure of time spent using the device, a measure of time spent performing a particular action using the device, a spatial coverage of the device during use, a pressure applied to a surface by the device during use, and an orientation of the device during use.

In some embodiments, the guidance data may relate to an optimal use of the device.

The first quality threshold may, in some embodiments, comprise a level at which a quality of usage of the device by the user is considered to be at a minimum intended quality level.

In some embodiments, the second quality threshold may be determined based on at least one of: the first quality threshold, an initial usage quality measure for the user, a current usage quality measure for the user, and a historic usage quality measure for the user.

The second guidance data may, in some embodiments, be provided for presentation to the user responsive further to determining that the usage quality measure is below the second quality threshold for a defined duration.

In some embodiments, the nature of the second guidance data may be determined based on the rate of decrease in the usage quality measure from the first quality threshold to the second quality threshold.

Providing the first guidance data and/or the second guidance data may, in some embodiments, comprise transmitting the first guidance data and/or the second guidance data to a connected device for presentation to the user.

According to a second aspect, the invention provides a computer program product comprising a non-transitory computer readable medium, the computer readable medium having computer readable code embodied therein, the computer readable code being configured such that, on execution by a suitable computer or processor, the computer or processor is caused to perform the method of any of the preceding claims.

According to a third aspect, the invention provides a guidance management apparatus comprising a processor configured to: receive data relating to the use of a device by a user; determine a usage quality measure for the user based on the received data; provide first guidance data for presentation to the user of the device, the first guidance data relating to the use of the device; responsive to determining that the usage quality measure is equal to or greater than a first quality threshold, halt presentation of first guidance data to the user; and responsive to determining that the usage quality measure is below a second quality threshold, provide second guidance data for presentation to the user.

According to a fourth aspect, the invention provides a device comprising a guidance management apparatus as disclosed herein. The received data may relate to the use of the device.

In some embodiments, the device may comprise a device selected from a group comprising: a personal care device, an oral care device, a hair cutting device, an interactive mirror, a medical device, a surgical device, and a tool.

The device may, in some embodiments, comprise a sensor configured to acquire the data relating to the use of a device by the user.

In some embodiments, the device may comprise a guidance delivery unit configured to deliver the first guidance data and/or the second guidance data to the user of the device.

These and other aspects of the invention will be apparent from and elucidated with reference to the embodiments described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is an example plot showing how a user's skill level associated with their use of a device may change over time;
Fig. 2 is an example plot showing how a user's skill level associated with their use of a device may change over time;
Figs. 3A and 3B are example plots showing how a user's skill level associated with their use of a device may change over time;
Fig. 4 is a flowchart of an example of a method relating to guidance control;
Fig. 5 is a schematic illustration of a computer program product comprising a non-transitory computer readable medium;
Fig. 6 is a schematic illustration of an example of a guidance management apparatus;
Fig. 7 is a schematic illustration of an example of a device; and
Fig. 8 is a schematic illustration of an example of a device.

### DETAILED DESCRIPTION OF THE EMBODIMENTS

Embodiments disclosed herein provide a mechanism for determining when to provide guidance to a user of a device, based on the way in which the user is using the device, which may be representative of the user's skill level or ability to use the device effectively or as intended. In the context of this invention, the term "device" is intended to cover any type of device which can be used and with which an element of skill may be used during its use. The disclosed embodiments are applicable to a wide range of fields. In some examples described herein, the invention is described in the context of personal care, with some examples involving the use of a personal care device such as, for example, a power toothbrush or a shaving device. As is apparent from the discussion below, the invention is equally applicable to other types of devices, such as hair cutting devices, interactive mirrors, medical devices, surgical devices and tools, power tools, garden tools, and the like.

When a user first uses a device, their initial skill level may be relatively low. Without assistance or guidance, the user's initial skill level may not improve upon further usage of the device. A user may incorrectly associate their lack of skill associated with using the device with a malfunction or wear of the device, or may incorrectly conclude that the device's performance is due to the device being of a low quality. To overcome this problem, guidance may be provided to a user of the device in order to improve the user's level of skill associated with their use of the device. Guidance may be provided audibly or visually or some other way, for example using haptics. Guidance may be provided via the device itself or a connected smart device such as a connected speaker or an interactive mirror. An interactive mirror, sometimes referred to as a smart mirror, is a unit which, in addition to functioning as a mirror to show a user his or her reflection, is also capable of displaying information to the user. Information, such as text, images and videos, may be displayed on a display portion of the interactive mirror which may, for example, be positioned behind a mirrored (or partially-mirrored) panel or a mirrored (or partially-mirrored) surface. In this way, the display screen, or portions thereof, may be visible through the mirror portion, so that a user is able to simultaneously view their reflection and information presented on the display screen. In other examples, an interactive mirror may use a camera image to display a mirrorlike image, mimicking the mirror experience. Interactive mirrors may, for example, contain general information and/or entertainment elements and contain items that directly enhance and support a user's personal care routine.

A user's skill level associated with their use of a device may be determined based on a sensed usage quality measure of the device. The sensed usage quality measure may be determined based on data relating to the use of the device by the user. The data may be obtained from one or more sensors associated with the device. The one or more sensors may comprise a camera used to monitor the user and/or device, a sensor located within the device such as an accelerometer, an inertial measurement unit or a magnetometer, a pressure sensor located on or within the device, a weighing scale, a timer, a blood pressure sensor, a heart rate sensor, or the like. Alternatively or additionally, a questionnaire answered by the user may be used to determine the sensed usage quality measure. In some embodiments, the data from each of the one or more sensors may be weighted depending on the importance and/or relevance of each sensor in determining the sensed usage quality measure. Guidance may be provided to the user of the device in order to increase the user's skill level associated with their use of the device. As a result of the user's skill level increasing, the user may experience an increased benefit associated with using the device (e.g. the user may be happier with the performance of the device), which, in turn, may maximise the user's likelihood of following any guidance that is provided to them regarding how to use the device in order to achieve a better result (e.g. a cleaner shave), and continuing to use the device. If guidance is provided continuously, the user may be less likely to follow the guidance during every use of the device, including, for example, when they are proficient in the use of the device. As a result, the user may decide to ignore or even disable the guidance, which, over time, may lead to a decrease in the user's skill level associated with their use of the device. Embodiments described herein seek to overcome these issues by providing guidance based on a user's skill level associated with their use of a device and/or based on how the user's skill level has changed over time.

A user's skill level associated with their use of a device may change over time. In some embodiments, the user's skill level may be determined by calculating how the data relating to the use of the device by the user relates to a nominal ideal usage of the device. Data acquired in respect of the use of the device by the user during a particular session using the device may be refered to as sensed usage data. Such a session during which a device is used may be referred to as a usage instance, or a use session. The sensed usage data of the device by the user, and thus the user's skill level associated with their use of the device, may be determined based on one or more factors, including a measure of time spent using the device, a measure of time spent performing a particular action using the device, a spatial coverage of the device during use, a pressure applied to a surface by the device during use, a position of the device, and/or an orientation of the device during use. Examples of a measure of time spent using the device may include, for example, a time associated with a usage instance of the device, the total time that the device has been used during its lifetime, the total time that the device has been used during its lifetime by a particular user, or a total time that the device has been used within a given time period (e.g. the total time that the device has been used within a week). A usage instance, or a use, of the device may be a given session using the device, for example, a given shave or a given oral care routine. Examples of a particular action using the device include a proportion of time spent shaving in which the user is making rotary motions over their face, a time spent holding a shaving device at the same position, a deviation from an ideal pressure of the device on a surface of an object, such as a body part of the user, a deviation from an ideal speed of motion of the device across a surface of an object, such as a body part of the user (e.g. a speed of motion of a shaver head across the user's face), the total time in which the device is used during a usage instance of the device (e.g. for a given shave), a position of the device during a usage instance, or the like. Examples of a spatial coverage of the device during a usage instance include a measurement of an area of an object, such as an area of a user's face that is covered during a usage instance of the device (e.g. during a given shave), a measurement of an area of a surface of a user's teeth that a toothbrush head is applied to during an oral care routine, a measurement of a coverage of a user's tooth surface during a usage instance of the device, or the like. Examples of a pressure applied to a surface by the device during a usage instance include a pressure with which the user applied a shaver head to their face, a pressure in which the user applied a toothbrush head to their teeth, or the like. Examples of an orientation of the device during a usage instance include an indication of an orientation in which the user is holding the device or an indication of a change in orientation of the device (e.g. an angle of the device relative to a user's skin), or the like. In some embodiments, the nominal ideal usage may be considered to be a level that it is intended that the user reaches. In other embodiments, the nominal ideal usage may be a usage level in excess of what the user may ever be able to achieve. The nominal ideal usage may correspond to sub-optimal usage of the device (e.g. usage that does not result in a best achievable shave) or to optimum usage of the device (e.g. resulting in a best achievable shave). The nominal ideal usage may be specific to the user of the device and may depend on features or properties of the user. Determining features or properties of the user may be based on an assessment of an image of the user or a questionnaire and/or based on acquired data associated with the user's use of a device. For example, a user with hair only in their moustache area will have a different optimum usage in movement, duration and pressure when using a shaving device compared to a user that has beard growth on their face and neck. In another example, a user that has partial dentures will not brush all areas of their teeth and will therefore have a different ideal usage than a user with fully natural teeth. The nominal ideal usage may be a predetermined value that does not change over time. Alternatively, the nominal ideal usage may be a dynamic value that does change over time, which may be dependent on the age of the device, the length of time in which the device has been used over its lifetime, the power available to the device, or the like. The nominal ideal usage may be defined, for example, by the manufacturer of the device. The nominal ideal usage may depend on the type of device.

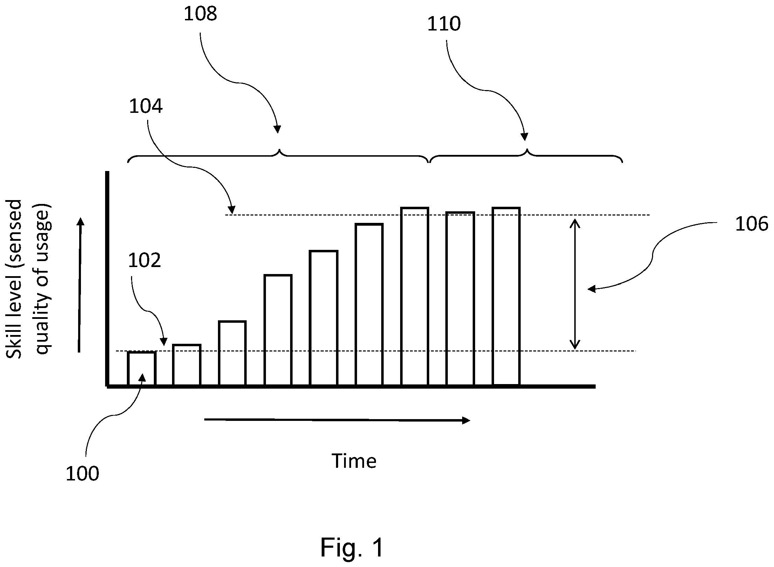

Referring now to the drawings, Fig. 1 is an illustration of how a user's skill level associated with their use of a device may change over time. The x-axis (horizontal axis) represents time, which increases from left to right. The y-axis (vertical axis) represents the user's skill level associated with their use of the device, which increases from bottom to top. The user's skill level at a particular time is represented by the height of a corresponding bar (e.g. bar 100). The user's initial skill level 102 is represented by the lower horizontal dashed line. Over time (i.e. from left to right), the user's skill level may increase from their initial skill level 102, which is represented by the generally increasing height of the bars. If no guidance is provided to the user describing how to use the device in order to achieve a better result (e.g. a cleaner shave), then the user's skill level may not increase from the user's initial skill level 102, or, alternatively, the user's skill level may increase relatively slowly from their initial skill level 102. If no guidance is provided to the user, the user may never achieve proficiency in the use of the device. In contrast, when guidance is provided to the user of the device, the user's skill level may increase relatively quickly. As a result of providing guidance to the user, the user may achieve proficiency in the use of the device.

Assessing whether a user is proficient in the use of a device may be based on one or more criteria. In some embodiments, the user may be considered to be proficient in the use of the device when their skill level is determined to meet or exceed a first threshold skill level. The first threshold skill level may be referred to as a first quality threshold. The first threshold skill level is represented by dashed line 104 in Fig. 1. The first threshold skill level 104 may vary depending on the user and/or may depend on the nature or type of the device (e.g. whether the device is a shaver, toothbrush, or the like). For example, the first threshold skill level 104 may depend on the user's initial skill level 102, the user's current skill level, and/or how the user's skill level has changed over time (e.g. between the user's initial and current skill levels). In some examples, assessing how the user's skill level has changed over time may comprise assessing a volatility of the user's previous skill levels (i.e. the user's skill levels during usage instances prior to the current usage instance) and/or a rate of change of the user's skill level over time. Alternatively, the first threshold skill level 104 may be a predetermined value (for example, set by a manufacturer). As explained previously, the user's skill level may be determined by calculating how the data relating to the use of the device by the user relates to the nominal ideal usage of the device. The user's skill level may be determined to increase when a change in the sensor data relating to the use of the device by the user indicates that the use of the device corresponds more closely with the nominal ideal usage associated with the device. In some examples, the first threshold skill level 104 may be less than the skill level associated with the nominal ideal usage of the device. In other examples, the first threshold skill level 104 may be equal to the skill level associated with the nominal ideal usage of the device. In yet further embodiments, the first threshold skill level 104 may be greater than the skill level associated with the nominal ideal usage of the device.

In some embodiments, the user may be considered to be proficient in the use of the device as soon as their sensed skill level is determined to meet or exceed the first threshold skill level 104 (i.e. the instant that the user's sensed skill level meets or exceeds the first threshold skill level 104 required for proficiency during a usage instance of the device). An example of how this scenario might arise includes when the user's skill level is determined to be equal to or greater than the first threshold skill level 104 (i.e. the skill level associated with proficient use of the device) part way through a shave. In this case, the user may be considered to be proficient in the use of the device irrespective of whether the user's skill level remains equal to or above the first threshold skill level 104 or decreases below the first threshold skill level 104 again during the same usage instance (e.g. during the same shave). In other embodiments, the user's sensed skill level may need to meet or exceed the first threshold skill level 104 for a minimum proportion of the time associated with a usage instance of the device. For example, the user's skill level may need to meet or exceed the first threshold skill level 104 for a minimum of half of the time spent shaving during a usage instance of the device (e.g. a given shave) in order for the user to be considered proficient in the use of the device. Thus, the user may be determined to be using the device proficiently the instant that the user's skill level equals or exceeds the first threshold skill level 104, or, alternatively, if the user's skill level is determined to meet or exceed the first threshold skill level 104 for a minimum amount of time during a usage instance of the device. In some embodiments, an average of the user's skill level is determined over the course of a usage instance (e.g. over the course of a shaving session). The user may be determined to be using the device proficiently during a usage instance of the device if the user's average skill level meets or exceeds the first threshold skill level 104.

In other embodiments, a user may be considered to be proficient in the use of a device only when their skill level associated with their use of the device (for example, during a usage instance of the device) is equal to or greater than the first threshold skill level 104 during two or more consecutive usage instances of the device. In yet further embodiments, the user may be considered to be proficient in the use of the device when their skill level associated with their use of the device is equal to or greater than the first threshold skill level 104 during a defined number of usage instances of the device (for example, if the user's skill level meets or exceeds the first threshold skill level 104 on any four usage instances of the device). In other embodiments, the user may be considered to be proficient in the use of the device when their skill level associated with their use of the device is equal to or greater than the first threshold skill level 104 for a defined number of usage instances of the device within a given time period or for a defined proportion of usage instances of the device (for example, if the user's skill level meets or exceeds the first threshold skill level 104 on any four out of five consecutive usage instances of the device). In some examples, the user may need to use the device proficiently for a minimum amount of time or during a minimum number of usage instances of the device before they are considered to be proficient in the use of the device. For example, the user may need to demonstrate that their skill level associated with their use of the device is equal to or greater than the first threshold skill level 104 for a predetermined amount of time, such as 1 day, 2 days, 1 week, 1 month or the like. In some embodiments, the user's skill level associated with their use of the device may be determined by using a rolling average of a defined number of the most recent usage instances. For example, the skill level of the most recent 12 shaves may be used to calculate an average skill level of the user. In yet further embodiments, an algorithm, such as a curve-fitting algorithm, may be employed that predicts the user's future skill level associated with their use of the device based on one or more earlier skill levels. Guidance may be halted or reinstated based on the output of the algorithm. Alternatively or additionally, tracking of delta-values associated with a usage instance may be used to determine when to halt or reinstate guidance. Whether or not the skill level associated with a usage instance of the device is considered to be equal to or greater than the first threshold skill level 104 may be assessed using any of the methods described previously, i.e. whether the instant that the user's sensed skill level increases to a level equal to or greater than the first threshold skill level 104, whether the user's sensed skill level increases to a level equal to or greater than the first threshold skill level 104 for a minimum amount of time during the usage instance of the device, or whether the user's average skill level during the usage instance is equal to or greater than the first threshold skill level 104. Other criteria may be used to determine whether a user is proficient in the use of a device, alone or in conjunction with the previously described criteria.

The increase in a user's skill level from their initial skill level 102 to an achieved current skill level (i.e. an increased skill level) may be termed the achieved improvement. Arrow 106 in Fig. 1 represents the difference between the user's initial skill level 102 associated with their use of a device and the first threshold skill level 104. The user's sensed skill level may be tracked over time, both prior to and subsequent to the user achieving proficiency in the use of the device. Time period 108 represents the time during which the user learns how to use the device (i.e. the period in which guidance is provided to the user). The user's skill level increases within time period 108. Time period 110 represents the time during which the user is considered to be proficient in the use of the device.

Guidance may be provided to a user of a device when the user first uses the device. The guidance data may relate to an optimal use of the device. For example, the guidance data may be intented to guide the user to improve their use of the device to try to improve the skill level of the user and/or to bring the user's use of the device more in to line with the nominal ideal usage. Guidance may comprise providing first guidance data for presentation to the user of the device based on the received data relating to the use of the device by a user. Guidance may be specific to a user and, therefore, the method may include identifying the user (e.g. using facial recognition techniques or other techniques using personal data of the user) in order to determine whether or not the guidance should be provided or to determine what guidance to provide to the user. In some embodiments, the user may be identified by using, for example, a toothbrush brush head identification from an RFID tag located in the brush head that is read by the toothbrush, which may be personal and associated with a specific user. A further example of how a user may be identified is in relation to a shaving device, wherein the shaving device may be paired through a wireless connection (e.g. Bluetooth (RTM)) to a personal smart device such as a smartphone. The guidance may vary according to the user's initial skill level 102 and may adapt in content and nature over time. The guidance may be modified due to the user's response to the guidance. When guidance is provided to the user, the user's skill level may increase. Guidance may be provided to the user via audible, visual, haptic, olfactory, or taste means. In some embodiments, guidance may be provided to the user via the device itself, for example, via an integrated speaker. In some examples, feedback may be provided to the user via a connected device, including a speaker, a smartphone, an interactive mirror, or the like. In some examples, feedback may be provided to the user visually via an interactive mirror, including textual instructions displayed on the mirror. Alternatively or additionally, guidance may be provided to the user via an interactive mirror pictorially by, for example, showing how the user should position the device, indicating whether the user should apply the device to a surface (for example, a body part) with more or less pressure, displaying a timer indicating a remaining time that the device should be used for, or the like. When the user obtains proficiency in the use of the device, the guidance may be halted or reduced. The guidance may be halted or reduced with or without requesting the user's permission.

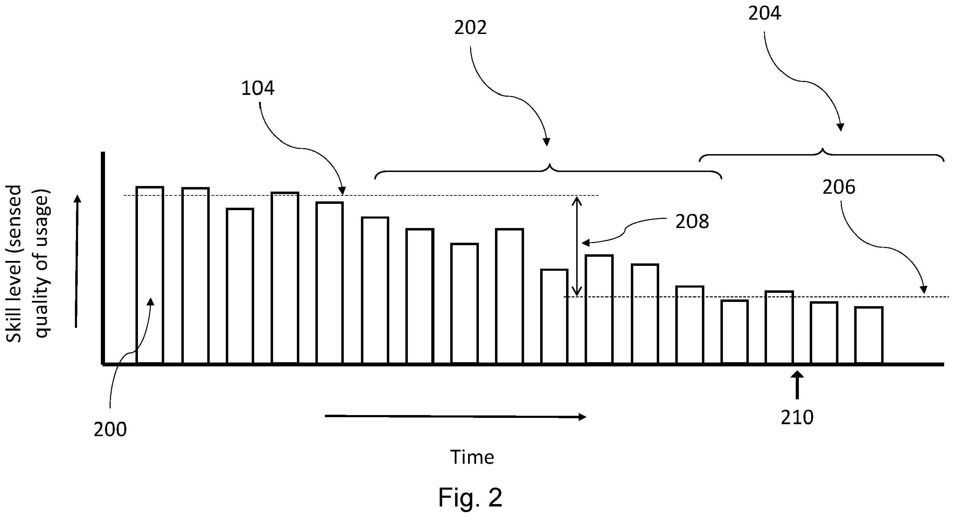

Fig. 2 is a plot showing how a user's skill level associated with their use of a device may vary over time. Specifically, Fig. 2 shows a user's skill level at a particular time as represented by the height of a bar (e.g. bar 200). The first threshold skill level 104 (i.e. the skill level associated with proficiency in device usage) is shown by dashed line 104. Over time, the user's skill level associated with their use of the device may decrease towards their initial skill level 102. As the skill level of the user decreases, there may be a corresponding decrease in a quality of function of the device, which may generally be imperceptible to the user. The user may attribute incorrectly the decrease in the quality of function of the device as a malfunction or wear of the device. The user's skill level may decrease below the previously determined first threshold skill level 104.

In some embodiments, if a user's skill level during a usage instance of the device falls below the first threshold skill level 104 (i.e. if the user's skill level during a usage instance of the device is determined to be below the first threshold skill level 104), the guidance may be reinstated. In other embodiments, if the user's skill level is determined to be below the first threshold skill level 104, the guidance may not be reinstated. In some embodiments, the guidance may be reinstated only when the user's skill level is determined to be below the first threshold skill level 104 during two or more consecutive usage instances of the device. In some embodiments, the guidance may be reinstated only when the user's skill level is determined to be below the first threshold skill level 104 for a defined number of usage instances of the device (e.g. when the user's sensed skill level is determined to be below the first threshold skill level 104 during any four usage instances of the device). In some embodiments, the guidance may be reinstated only when the user's skill level is determined to be below the first threshold skill level 104 for a defined number of usage instances of the device within a given time period or for a defined proportion of usage instances of the device (e.g. if the user's skill level is determined to be below the first threshold skill level 104 during any four out of five consecutive usage instances of the device). In some embodiments, the guidance may be reinstated only when the user's skill level is determined to be below the first threshold skill level 104 for a minimum amount of time or during a minimum number of usage instances of the device. For example, the guidance may be reintroduced if the user's skill level associated with their use of the device is below the first threshold skill level 104 for a predetermined amount of time, such as 1 day, 2 days, 1 week, 1 month or the like. In some embodiments, guidance may be reintroduced if the user's skill level associated with their use of the device falls below their initial skill level, irrespective of any other threshold condition (e.g. even if the user's skill level does not fall below the first threshold skill level 104 for a predetermined amount of time).

As explained previously, the user's skill level associated with their use of the device may be determined on an instantaneous basis or may be determined for each usage instance of the device (e.g. an average skill value for a given shave). For example, the user's skill level may be determined based on an average skill level of the user during a usage instance. A general decrease in the user's skill during time period 202 is shown in Fig. 2. The user's skill level may increase as well as decrease at times, as shown in Fig. 2. The general decrease in the user's skill during time period 202 may be due to the guidance being halted (i.e. no provision of guidance to the user). Over time, the user's skill level associated with their use of the device may become significantly and consistently degraded to an approximately constant level, shown by the user's skill levels during period 204 (e.g. the user's skill levels during period 204 are relatively and consistently lower than the first threshold skill level 104) in Fig. 2. A user's decrease in skill level may be considered to be significant if an absolute difference between the first threshold skill level 104 and the user's current skill level exceeds a threshold value, if an absolute difference between the user's maximum achieved skill level and the user's current skill level exceeds a threshold value, if the user's current skill level decreases below a predetermined percentage of the first threshold skill level 104 (e.g. if the user's current skill level decreases below 50% of the first threshold skill level 104), if the user's current skill level decreases below a predetermined percentage of the user's maximum achieved skill level, if the user's current skill level decreases by more than one standard deviation below the first threshold skill level 104, or the like. In some embodiments, two or more criteria (e.g. those described previously) may be applied in order to determine whether a decrease in a user's skill level associated with their use of a device is significant. The change in a user's skill level may be determined based on the difference between the first threshold skill level 104 (i.e. the skill level associated with proficiency in device usage) and the user's current skill level. The user's current skill level may be their instantaneous skill level, their skill level associated with the current or most recent usage instance of the device (e.g. the user's average skill level during a usage instance), or the user's skill level associated with a defined number of usage instances (e.g. two or more usage instances) of the device (e.g. an average of the user's skill level associated with two usage instances of the device). When the user's current skill level is determined to be below a second threshold skill level 206, it may be desirable to provide the user with guidance in order to improve their current skill level. The difference between the first threshold skill level 104 and the second threshold skill level 206 associated with device usage is shown by arrow 208 in Fig. 2. The time at which guidance may be reinstated in shown by arrow 210 in Fig. 2. Various techniques may be used to determine when to reinstate the guidance.

In some embodiments, the guidance may be reinstated only if a user's skill level during a usage instance of the device falls below the second threshold skill level 206 (i.e. if the user's skill level during the usage instance of the device is determined to be below the second threshold skill level 206). The second threshold skill level is shown by line 206 in Fig. 2. The second threshold skill level 206 may be referred to as a second quality threshold. As explained previously, the user's skill level associated with their use of the device may be determined on an instantaneous basis or may be determined for each usage instance of the device (e.g. a given shave). For example, the skill level of the user during a usage instance may be considered to fall below the second threshold skill level 206 the instant that the user's skill level is determined to be below the second threshold skill level 206 (i.e. at any point during the usage instance). In other examples, the user's skill level associated with a usage instance may be considered to fall below the second threshold skill level 206 only if the user's average skill level for that usage instance is determined to be below the second threshold skill level 206. In other embodiments, the guidance may be reinstated only when the user's skill level is determined to be below the second threshold skill level 206 during two or more consecutive usage instances of the device. In some embodiments, the guidance may be reinstated only when the user's skill level is determined to be below the second threshold skill level 206 during a defined number of usage instances (e.g. when the user's sensed skill level is determined to be below the second threshold skill level 206 during any four usage instances of the device). In some embodiments, the guidance may be reinstated only when the user's skill level is determined to be below the second threshold skill level 206 for a defined number of usage instances of the device within a given time period or for a defined proportion of usage instances of the device (e.g. if the user's skill level is determined to be below the second threshold skill level 206 during any four out of five consecutive usage instances of the device). In some embodiments, the guidance may be reinstated only when the user's skill level is determined to be below the second threshold skill level 206 for a minimum amount of time or during a minimum number of usage instances of the device. For example, the user may need to demonstrate that their skill level associated with their use of the device is below the second threshold skill level 206 for a predetermined amount of time, such as 1 day, 2 days, 1 week, 1 month or the like.

The second threshold skill level 206 may be a constant value, or may be a dynamic value that changes over time. The second threshold skill level 206 may be a predetermined value (for example, set by a manufacturer), or may vary depending on the user. The second threshold skill level 206 may be dependent on the user's initial skill level 102, the user's current skill level, the nominal ideal usage, an average skill level of users of the device in general (i.e. an average skill level based on one or more users of the device that are not the current user of the device), an average skill level of users of the device that are similar to the user (i.e. an average skill level based on one or more users of the device that are not the current user of the device and who are determined to be similar to the current user of the device), and/or how the user's skill level has changed over time (for example, the difference between the user's initial and current skill levels). In some examples, the second threshold skill level 206 may depend on the first threshold skill level 104 and/or may depend on the user's initial skill level. For example, the second threshold skill level 206 may be determined to be 80% of the first threshold skill level 104, or, alternatively, the second threshold skill level 206 may be determined to be the higher value of 50% of the nominal ideal usage and 65% of the first threshold skill level 104. Advantageously, the difference between the first threshold skill level 104 and the second threshold skill level 206 may be determined or set so as to be large enough that newly delivered guidance may result in a noticeable improvement in perceived quality of function and thus may result a noticeable benefit for the user.

As explained above, responsive to determining that a user's skill level associated with their use of a device (i.e. usage quality measure) is below the second threshold skill level 206 (i.e. below the second quality threshold), second guidance data may be provided for presentation to the user of the device. In some embodiments, the second guidance data may be the same as the first guidance data. In other embodiments, the second guidance data may be different to the first guidance data. The second guidance data may provide information to the user in order to aid them in improving their skill level associated with their use of the device. Guidance data may be part of a device instructions programme, or data providing hints or advice relating or improving the outcome of the device by changing the way the device is used. The guidance may, for example, include textual or spoken instructions, diagrams, drawings, videos, animations, or the like, intended to guide the user to improve their use of the device.

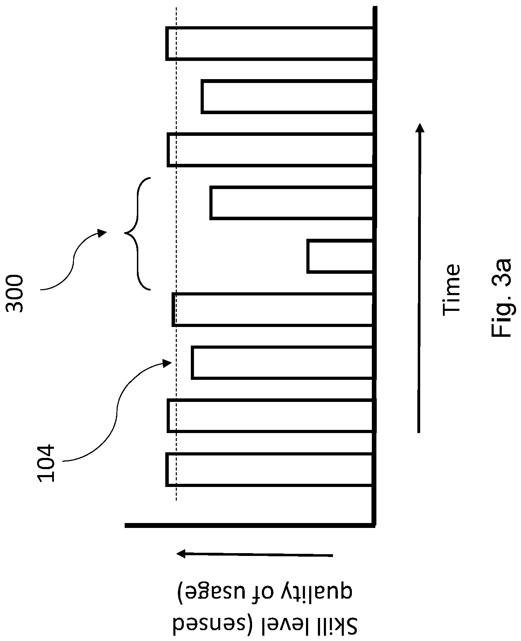

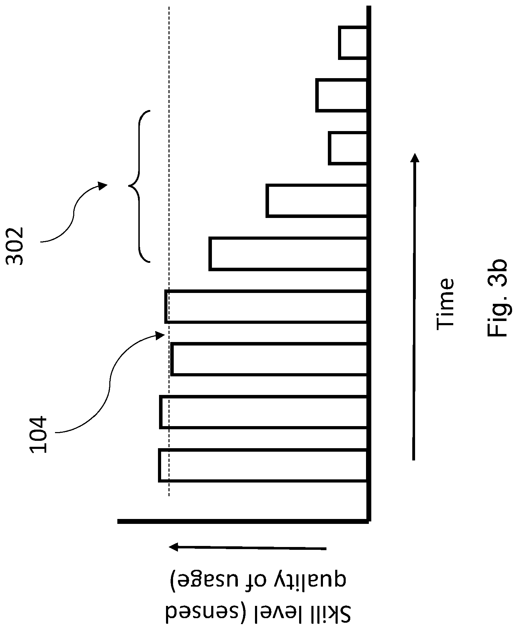

Figs. 3A and 3B show data plotted in two graphs, relating to two example scenarios. Fig. 3A shows a decrease in a user's skill level associated with their use of a device followed by an increase in their skill level (shown by the change in height of the bars during a time period labelled 300). Fig. 3B shows a consistent decrease in the user's skill level (shown by the change in height of the bars during a time period labelled 302). In Fig. 3A, the temporary lapse in the user's skill level may occur for a number of reasons, including, for example, that the user is not paying full attention to their use of the device, a second user who is not proficient in the use of the device uses the device, the device is running low on power, or the like. Dashed line 104 indicates the first threshold skill level (i.e. the skill level associated with proficiency in device usage). While the lapse shown in Fig. 3A may be considered to be significant, the lapse may not be considered to be consistent (e.g. a consistent decrease may be a decrease in skill level that occurs during more than one usage instance of the device); in this case, the guidance may not be reinstated. In some embodiments, it may be desirable to reinstate guidance upon observing even a temporary lapse of skill level (for example, to serve as a reminder for the user to use the device correctly). In Fig. 3B, the decrease in the user's skill level associated with their use of the device may be considered to be both significant and consistent (e.g. occurring during two or more usage instances of the device). In this case, it may be desirable to provide guidance to the user. This guidance may be referred to as second guidance. In some examples, the second guidance may be the same as the first guidance. In other examples, the second guidance may be different to the first guidance (for example, the second guidance may be briefer than the first guidance). A case as shown in Fig. 3B may arise if the user consciously ignores the guidance provided to them previously or if the user's ability to use the device decreases (for example, if the user forgets a technique provided in the first guidance), resulting in a significant and consistent decrease in their skill level.

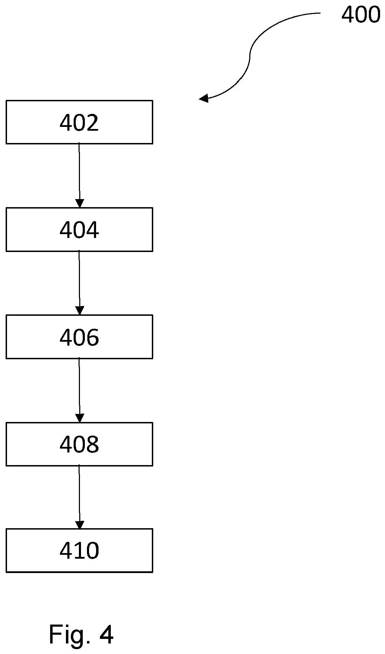

Thus, according to a first aspect, a method is provided. Fig. 4 is a flow diagram describing the steps of a guidance control method 400. The method may be considered to be a computer-implemeneted method. Step 402 of the method comprises receiving data relating to the use of a device by a user. The data may be acquired using at least one sensor associated with the device. Alternatively or additionally, the data may be obtained from a memory, such as a memory of the device, or memory stored external to the device which is in communication with the device. The data that is stored on a memory may comprise data relating to historic measurements of the at least one sensor associated with the device.

Step 404 of the method comprises determining a usage quality measure for the user based on the received data.

Step 406 of the method comprises providing first guidance data for presentation to the user of the device, the first guidance data relating to the use of the device.

Step 408 of the method comprises responsive to determining that the usage quality measure is equal to or greater than a first quality threshold, halting presentation of first guidance data to the user.

Step 410 of the method comprises responsive to determining that the usage quality measure is below a second quality threshold, providing second guidance data for presentation to the user of the device.

Steps of the method 400 may be performed using a processor or processors of one or more devices or apparatuses described herein. In some embodiments, the method 400 may be performed by a remoted processing facility (e.g. in a cloud-computing environment) while, in other embodiments, the method may be performed by the device in respect of which data is acquired, or by any other device having processing capability (e.g. a computing device). In some embodiments, the method 400 may further comprise steps discussed in the above examples.

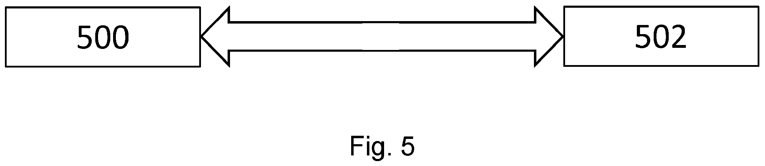

According to a second aspect, a computer program product is provided. Fig. 5 is a schematic illustration of an example of a computer readable medium in communication with a processor. According to some embodiments, a computer program product comprises a non-transitory computer readable medium 500. The computer readable medium 500 may have computer readable code embodied therein, and the computer readable code may be configured such that, on execution by a suitable computer or processor 502, the computer or processor 502 is caused to perform steps of the method 400 described herein. In some embodiments, the computer or processor 502 may be caused to perform other steps as discussed in the above examples.

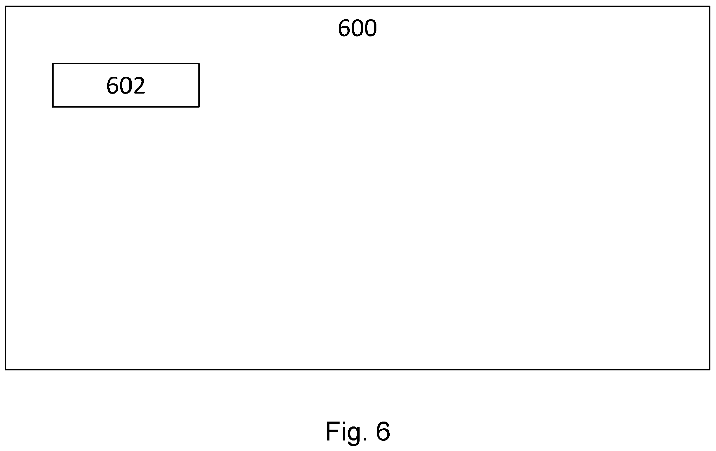

According to a third aspect, an apparatus is provided. Fig. 6 is a schematic illustration of an example of a guidance management apparatus 600 comprising a processor 602 configured to perform the method described herein. Specifically, in some embodiments, the processor 602 may be configured to receive data relating to the use of a device by a user; determine a usage quality measure for the user based on the received data; provide first guidance data for presentation to the user of the device, the first guidance data relating to the use of the device; responsive to determining that the usage quality measure is equal to or greater than a first quality threshold, halt presentation of first guidance data to the user; and responsive to determining that the usage quality measure is below a second quality threshold, provide second guidance data for presentation to the user. The processor 602 may comprise, or be similar to, the processor 502 discussed above. The guidance management apparatus 600 may be incorporated into a device, as described below, or may deliver the first and second guidance data to another device for presentation to the user. The guidance management apparatus 600 may, in some embodiments, comprise a storage unit (e.g. a memory) for storing the received data. For example, data relating to past usage instances of the device may be stored and used to determine the first guidance threshold and/or the second guidance threshold.

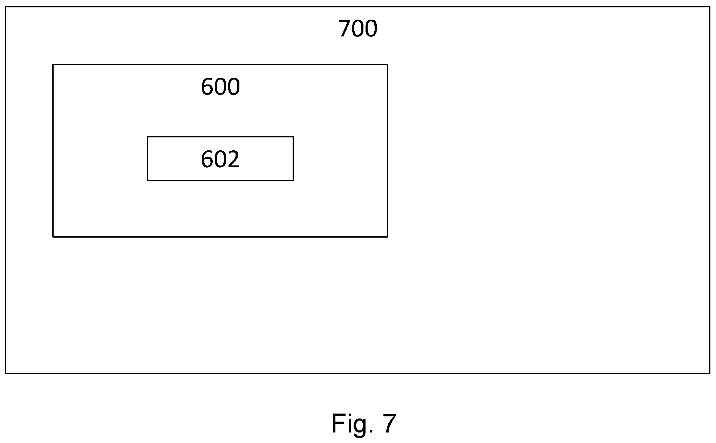

According to a fourth aspect, a device is provided. Fig. 7 is a schematic illustration of an example of a device 700 comprising a guidance management apparatus 600 according to the description contained herein. The received data may relate to the use of the device 700. In other words, the device in respect of which the usage data is received (e.g. a power toothbrush or a shaving device) may also include the guidance management apparatus 600. In this way, the user can receive feedback (e.g. guidance) according to the invention directly from the device itself. As noted above, the device may comprise any type of device whose use may be monitored, and respect of which guidance relating to its use may be provided to the user.

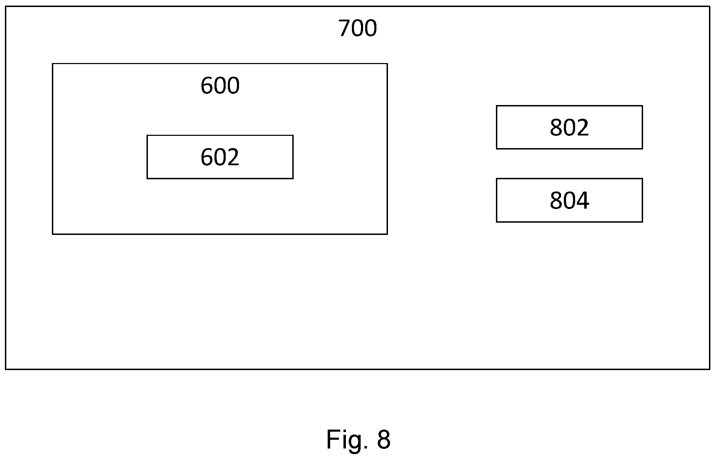

Fig. 8 is a schematic illustration of a further example of a device 700 comprising a guidance management apparatus 600 according to the description contained herein. In the example shown in Fig. 8, the device 700 may comprise a sensor 802 configured to acquire the data relating to the use of a device 700 by the user. The sensor 802 may comprise a device discussed in the examples above (e.g. a force sensor configured to measure a force at which a toothbrush head is applied to a user's tooth). The device 700 may comprise a guidance delivery unit 804 configured to deliver the first guidance data and/or the second guidance data to the user of the device 700. The guidance delivery unit 804 may, for example, comprise a user interface, a display screen, a speaker, or the like, capable of presenting the guidance to the user.

The processor 502, 602 can comprise one or more processors, processing units, multi-core processors or modules that are configured or programmed to control the apparatus 600 or the device 700 in the manner described herein. In particular implementations, the processor 502, 602 can comprise a plurality of software and/or hardware modules that are each configured to perform, or are for performing, individual or multiple steps of the method described herein.

The term "module", as used herein is intended to include a hardware component, such as a processor or a component of a processor configured to perform a particular function, or a software component, such as a set of instruction data that has a particular function when executed by a processor.

It will be appreciated that the embodiments of the invention also apply to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to embodiments of the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a flash memory module, a ROM, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented guidance control method (400) comprising:
receiving (402) data relating to the use of a device by a user;
determining (404) a usage quality measure for the user based on the received data;
providing (406) first guidance data for presentation to the user of the device, the first guidance data relating to the use of the device;
responsive to determining that the usage quality measure is equal to or greater than a first quality threshold (104), halting (408) presentation of first guidance data to the user; and
responsive to determining that the usage quality measure is below a second quality threshold (206), providing (410) second guidance data for presentation to the user of the device.

2. A method (400) according to claim 1, wherein the data is acquired using at least one sensor associated with the device.

3. A method (400) according to claim 1 or claim 2, wherein the data comprises data selected from a group comprising:
a measure of time spent using the device, a measure of time spent performing a particular action using the device, a spatial coverage of the device during use, a pressure applied to a surface by the device during use, and an orientation of the device during use.

4. A method (400) according to any of the preceding claims, wherein the guidance data relates to an optimal use of the device.

5. A method (400) according to any of the preceding claims, wherein the first quality threshold (104) comprises a level at which a quality of usage of the device by the user is considered to be at a minimum intended quality level.

6. A method (400) according to any of the preceding claims, wherein the second quality threshold (206) is determined based on at least one of: the first quality threshold (104), an initial usage quality measure for the user, a current usage quality measure for the user, and a historic usage quality measure for the user.

7. A method (400) according to any of the preceding claims, wherein the second guidance data is provided for presentation to the user responsive further to determining that the usage quality measure is below the second quality threshold (206) for a defined duration.

8. A method (400) according to any of the preceding claims, wherein the nature of the second guidance data is determined based on the rate of decrease in the usage quality measure from the first quality threshold (104) to the second quality threshold (206).

9. A method (400) according to any of the preceding claims, wherein providing the first guidance data and/or the second guidance data comprises transmitting the first guidance data and/or the second guidance data to a connected device for presentation to the user.

10. A computer program product comprising a non-transitory computer readable medium (500), the computer readable medium having computer readable code embodied therein, the computer readable code being configured such that, on execution by a suitable computer or processor (502), the computer or processor is caused to perform the method (400) of any of the preceding claims.

11. A guidance management apparatus (600) comprising:
a processor (602) configured to:
receive data relating to the use of a device by a user;
determine a usage quality measure for the user based on the received data;
provide first guidance data for presentation to the user of the device, the first guidance data relating to the use of the device;
responsive to determining that the usage quality measure is equal to or greater than a first quality threshold (104), halt presentation of first guidance data to the user; and
responsive to determining that the usage quality measure is below a second quality threshold (206), provide second guidance data for presentation to the user.

12. A device (700) comprising:
a guidance management apparatus (600) according to claim 11;
wherein the received data relates to the use of the device.

13. A device (700) according to claim 12, wherein the device comprises a device selected from a group comprising:
a personal care device, an oral care device, a hair cutting device, an interactive mirror, a medical device, a surgical device, and a tool.

14. A device (700) according to any of claims 12 to 13, further comprising:
a sensor (802) configured to acquire the data relating to the use of a device by the user.

15. A device (700) according to any of claims 12 to 14, further comprising:
a guidance delivery unit (804) configured to deliver the first guidance data and/or the second guidance data to the user of the device.
